# EUROPÄISCHE PATENTSCHRIFT

(11) **EP 0 615 950 B1**
(45) Veröffentlichungstag und Bekanntmachung des Hinweises auf die Patenterteilung: **08.10.1997**
(21) Anmeldenummer: 94103109.8
(22) Anmeldetag: 02.03.1994
(51) Int. Cl.: C01B 17/80, C22C 38/40

(54) **Verwendung von Knet- und Gusswerkstoffen sowie Schweisszusatzwerkstoffen für mit heisser konzentrierter Schwefelsäure beaufschlagte Bauteile**
Use of wrought and cast alloys and welding additives for parts contacted by concentrated hot sulphuric acid
Utilisation d'alliages de forgeage et de moulage ainsi que des métaux d'apport pour des pièces venant en contact avec de l'acide sulfurique concentré chaud

(30) Priorität: 15.03.1993 DE 4308151
(43) Veröffentlichungstag der Anmeldung: 21.09.1994
(73) Patentinhaber: BAYER AG, 51368 Leverkusen (DE)
(72) Erfinder: Diekmann, Helmut, Dipl.-Ing., D-51399 Burscheid (DE); Lailach, Günter, Dr., D-47799 Krefeld (DE); Savakis, Stylianos, Dr., D-51069 Köln (DE)

(56) Entgegenhaltungen:
- EP-A- 0 013 507
- EP-A- 0 378 998
- EP-A- 0 458 606
- EP-A- 0 516 955
- EP-A- 0 566 950
- DE-A- 3 320 527
- US-A- 4 576 813
- Nicrofer 2509 Si7 Werkstoffblatt Nr. 4110, Juni 95, KRUPP VDM
- Chem. Ind. 11, 92, Seiten 54-56

## Beschreibung

Die vorliegende Erfindung betrifft die Verwendung von Werkstoffen für mit heißer, konzentrierter Schwefelsäure beaufschlagte Bauteile.

Im Schrifttum finden sich zahlreiche Angaben zur Korrosionsbeständigkeit von Werkstoffen gegenüber heißer, konzentrierter Schwefelsäure.

Wegen der mit steigender Schwefelsäure-Konzentration zunehmenden Löslichkeit des Bleisulfats können Blei und seine Legierungen nur bei Konzentrationen bis 78 % H₂SO₄ und nur bis 110°C eingesetzt werden (Ullmanns Encyclopädie der technischen Chemie, 4. Auflage, Band 21 (1982), S. 157).

Unlegierter Stahl kann in 68-99 %igen Schwefelsäuren bis 70°C verwendet werden, wobei allerdings mit Abtragungsraten bis zu 1,3 mm/a zu rechnen ist (G. Nelson, Corrosion Data Survey, Shell Development Co., San Franzisco, 1950, S. ZT-102A). Im Konzentrationsbereich von 99 bis 100 % H₂SO₄ nimmt die Beständigkeit des unlegierten Stahls deutlich ab. Höhere Strömungsgeschwindigkeiten sind bei unlegiertem Stahl zu vermeiden (Ullmann, loc. cit.; Z. f. Werkst.-Techn. 4 (1973), S. 169/186; R. J. Borges, Corrosion/87, Paper No. 23, NACE, Houston, Texas, 1987).

Mit Chrom oder Kupfer legierte Gußeisensorten sind bei Schwefelsäure-Konzentrationen von 90-99 % bis etwa 120°C beständig (Ullmann, loc. cit.), jedoch ist auch hier die Strömungsabhängigkeit der Korrosion zu beachten (Z. f. Werkst.-Techn., loc. cit.). Der Eisen-Silicium-Gußwerkstoff mit 14-18 % Si besitzt eine sehr gute Korrosionsbeständigkeit in weiten Konzentrations- und Temperaturbereichen (Ullmann loc. cit.); von großem Nachteil sind jedoch die Härte und die Sprödigkeit dieses Sondergußeisens (R. J. Borges, Corrosion/87, loc. cit.; Ullmann, 4. Auflage, Band 3 (1973), S. 21). Nichtrostende austenitische Standard-Stähle, wie gemäß Werkst.-Nr. 1.4571, werden bei konzentrierten Schwefelsäuren bis zu Temperaturen von 85°C eingesetzt. Mit zunehmender Temperatur steigen die Abtragungsraten steil an. Bereits bei 150°C ist mit Abtragungsraten um 1 mm/a zu rechnen (Z. f. Werkst.-Techn. 8 (1977), S. 362/370 und 410/417), wobei die Strömungsabhängigkeit der Korrosion ausgeprägt ist.

Die Verwendung von Nickelbasislegierungen bringt keine Vorteile. Bei Plattenwärmetauschern aus NiMo16Cr15W, Werkst.-Nr. 2.4819 (Typ Hastelloy alloy C-276), die zum Kühlen von konzentrierter Schwefelsäure eingesetzt werden, wird die Produkttemperatur auf 95°C begrenzt (N. Sridhar, Materials Performance März 1988, S. 40/46).

Es hat daher nicht an Vorschlägen gefehlt, die Schwefelsäureheständigkeit durch Legierungsmaßnahmen zu verbessern. So zeigt die 3,7-4,3 % Si enthaltende nichtrostende, austenitische Stahlsorte X 1 CrNiSi 18 15, Werkst.-Nr. 1.4361, eine wesentlich höhere Beständigkeit als Werkst.-Nr. 1.4571 in beispielsweise 98,5 %iger Schwefelsäure bei 150 und 200°C (Ullmann, Band 3, S. 21); die Strömungsabhängigkeit der Korrosion ist sehr gering (Z. f. Werkst. Techn. 8 (1977), S. 362/370 und 410/417; M. Renner u. R. Kirchheiner, "Korrosionsbeständigkeit von hochlegierten nichtrostenden Sonderstählen in stark oxidierenden Medien", Vortrag anläßlich des Seminars "Nickelwerkstoffe und hochlegierte Sonderstähle", Esslingen, 7./8. April 1986). Durch weiteres Anheben des Si-Gehaltes auf 4,5 bis 5,8 %, bevorzugt 5,0 bis 5,6 %, läßt sich die Korrosionsbeständigkeit der austenitischen, nichtrostenden Stähle in heißen 85 %igen, vorzugsweise 90 %igen Schwefelsäuren, innerhalb gewisser Grenzen verbessern (US 4. 543 244; DE-OS 33 20 527). Für den praktischen Einsatz bei höheren Temperaturen kommt ein derartiger Sonderstahl wegen der ausgeprägten Temperaturabhängigkeit der Korrosion kaum in Betracht. Folgende Abtragungsraten wurden bei einem nichtrostenden, vollaustenitischen Stahl der Zusammensetzung 17,5 % Cr, 17,5 % Ni, 5,3 % Si, Rest im wesentlichen Eisen, in 98,2 %iger Schwefelsäure ermittelt (genannte US' 244 und DE' 527):
- 125°C: 0,1 mm/a,
- 135°C: 0,8 mm/a,
- 145°C: 1,6 mm/a,
in 93,5 %iger H₂SO₄ wurde bei 85°C eine Korrosionsgeschwindigkeit von 0,25 mm/a festgestellt. Zur Verringerung der Korrosion kann ein anodischer Schutz der Anlagen vorgesehen werden; unter diesen Bedingungen beträgt die Abtragungsrate in 93,5 %iger H₂SO₄ bei 200°C jedoch immer noch 1,1 mm/a. Als Nachteil ist ferner die merkliche Strömungsabhängigkeit der Korrosion des nichtrostenden Chrom-Nickel-Silicium-Stahls in Schwefelsäuren zu werten; beispielsweise beträgt die Abtragungsrate einer rotierenden Scheibe (Durchmesser: 30 mm, Drehzahl: 2.000 min⁻¹) in 96 %iger Schwefelsäure bei 150°C bereits 3,7 mm/a.

Weiterhin wurden härtbare Nickelbasislegierungen mit 2-4 % Si zur Handhabung heißer, mindestens 65 %iger Schwefelsäure vorgeschlagen (DE-PS 21 54 126). Die Abtragungsraten in auf 120°C erwärmter Schwefelsäure sind mit etwa 0,6 mm/a jedoch recht hoch. Für eine weitere aushärtbare und strömungsunempfindliche Nickelbasislegierung werden Abtragungsraten von 0,25 mm/a in auf 140°C erwärmter 98 %iger H₂SO₄ angegeben (R. J. Borges, Corrosion/87, loc. cit.).

Ein nichtrostender austenitischer Stahl mit 17 % Cr, 16 %. Ni, 3,7 % Si und 2,3 % Mo kann dagegen nur in kalten Schwefelsäuren bei Konzentrationen unterhalb 10 % und oberhalb 80 % verwendet werden (Druckschrift Nr. 235 der CAFL: Uranus, rost- und säurebeständige Stähle für schwierige Korrosionsprobleme, S. 37).

Ferner beschreibt GB 1 534 926 nichtrostende austenitische Chrom-Nickel-Silicium-Kupfer-Molybdän-Stähle mit hoher Korrosionsbeständigkeit in konzentrierter Schwefelsäure; diese Stähle sind durch folgende Zusammensetzung (Massenanteile in %) gekennzeichnet:
- C: max. 0,06 %
- Si: 4,1 bis 12 % (≥ 4,7 %; 6,5 bis 12 %; 7 bis 11 %; 7,5 bis 10 %)
- Mn: max. 4 % (3 %; 1 %, 0,5 %)
- Cr: 6 bis 22 % (6 bis 17 %; 8 bis 15 %; 9 bis 14 %)
- Ni: 10 bis 40 % (10 bis 25 %; 12 bis 23 %; 14 bis 20 %)
- (Mo+1/2W): max. 1,5 % (0,5 bis 1 %)
- Cu: 0,6 bis 4 % (≥ 1 %; 1,5 bis 3,5 %; 2 bis 3 %)
- N: max. 0,2 % und
- Nb+Ta+Zr+V: max. 2 %

Derartigen Stählen haftet ein Mangel an, da das Legierungselement Molybdän die Versprödungsneigung der nichtrostenden austenitischen Chrom-Nickel-Silicium-Stähle deutlich erhöht, was u.a. bei der Warmumformung, beispielsweise beim Pressen von Böden, zu erheblichen Schwierigkeiten führen kann. Ferner erschwert auch das Legierungselement Kupfer die Warmverarbeitbarkeit (Ullmanns Encyclopädie der technischen Chemie, 4. Auflage (1982), Band 22, S. 56) und die Heißrißanfälligkeit. Weiterhin ist zu beachten, daß kupferlegierte nichtrostende austenitische Stähle in heißen Schwefelsäuren spannungsrißkorrosionsanfällig sind (I. Class u. H. Gräfen, Werkst, u. Korros. 1964, S. 79/84; H. Gräfen, Werkst. u. Korros. 1965, S. 876/879).

Schließlich wurden noch 4-6 % Silicium enthaltende Eisen-Chrom-Nickel-Legierungen beschrieben, deren Deltaferrit-Anteil auf 5 bis 10 % begrenzt wird, damit kein zusammenhängendes Deltaferrit-Netz ausgebildet werden kann (D. J. Chronister und T. C. Spence, Corrosion 85, Paper 305, NACE, Boston/Mas., März 1985). Mit einem solchen Netzwerk ist bei Deltaferrit-Anteilen ab 10 % zu rechnen. Bei einer von D. J. Chronister et al. beschriebenen, 4,8 % Si enthaltenden Legierung sind die Abtragungsraten in auf 110°C erwärmter 95 %iger H₂SO₄ zunächst relativ gering (0,4 mm/a), steigen aber bei längerer Beanspruchungsdauer rasch auf 2,4 mm/a an. Bei 5 bis 5,2 % Si enthaltenden Legierungen wurden unter diesen Bedingungen Korrosionsgeschwindigkeiten von 0,11 bis 0,56 mm/a gefunden. Erst bei 5,6 % Si stellen sich Abtragungsraten von etwa 0,1 mm/a ein. Erhöht man die Temperatur der 95 %igen H₂SO₄ auf 130°C, werden bei einem Si-Gehalt von 5,6 % wiederum steigende Abtragungsraten beobachtet, die im ersten Prüfabschnitt (48 h) 0,66 mm/a, im zweiten Abschnitt bereits 1,24 mm/a betragen; bei einem Si-Anteil von 5,9 % liegen die Abtragungsraten bei 0,45-0,54 mm/a.

Für die Handhabung heißer konzentrierter Salpetersäure werden in EP-A-0 013 507 Ni-Cr-Si-Stähle vorgeschlagen, die durch einen Si-Gehalt von 5 bis 7 %, einen Cr-Gehalt von 7 bis 16 % einen Ni-Gehalt von 10 bis 19 %, einen Mn-Gehalt von bis zu 10 % gekennzeichnet sind und ein oder mehrere der Elemente Ti, Zr, Ta, Nb in einer Menge von nicht weniger als der 4-fachen Menge an Kohlenstoff und nicht mehr als 2 % enthalten, wobei der C-Gehalt nicht mehr als 0,02 % betragen darf.

In der DE-A-4 118 437 (entspricht EP-A-516 955) werden austenitische Ni-Cr-Si-Stähle mit guter Korrosionsbeständigkeit in oxidierenden Säuren beschrieben. Diese Stähle sind durch folgende Zusammensetzung (Massenanteile in %) charakterisiert:
- C: max. 0,02 Gew.-%
- Ni: 10 bis 25 Gew.-%
- Cr: 8 bis 13 Gew.-%
- Si: 6,5 bis 8 Gew.-%
- Mn + Co: 0 bis 10 Gew.-%
- S: max. 0,010 Gew-%
- P: max. 0,025 Gew.-%

Diese Legierungen weisen neben einer guten Salpetersäurebeständigkeit auch in 96 %iger Schwefelsäure bis 150°C eine noch akzeptale Korrosionsbeständigkeit auf; bei Temperaturen bis 200°C muß jedoch ein Korrosionszuschlag bei der Wanddickenberechnung berücksichtigt werden. Um den Korrosionsabtrag in 96 %iger Schwefelsäure bei 200°C zu reduzieren, sind Si-Gehalte von 7,5 bis 8 % notwendig. Durch diese hohen Si-Gehalte wird jedoch die Verarbeitbarkeit der Legierungen erheblich erschwert.

Sowohl bei der Herstellung als auch bei der Konzentrierung und Reinigung von Schwefelsäure sind jedoch höhere Temperaturbereiche verfahrenstechnisch besonders interessant. Nach dem Stand der Technik (s.o. sowie U. Heubner, Chemische Industrie 11 (1992), S. 54 bis 56) können o.g. Stähle mit Si-Gehalten < 7,5 % jedoch wegen den hohen Abtragungsraten in höheren Temperaturbereichen nicht wirtschaftlich eingesetzt werden.

Für den Einsatz bei Temperaturen von > 200°C in konzentrierten Schwefelsäuren werden austenitisch-ferritische Cr-Ni-Si-Stähle vorgeschlagen (EP-A-378 998), denen jedoch der Mangel anhaftet, bei langzeitiger Auslagerung bei Temperaturen um 300°C an Duktilität zu verlieren.

Aufgabe war es daher, Werkstoffe zur Verfügung zu stellen, die für den Einsatz in konzentrierten Schwefelsäuren (90-96 Gew.-%) bei Temperaturen von > 200°C bis zum Siedepunkt der entsprechenden Schwefelsäure geeignet sind und korrosionsbeständig sind und außerdem gut verformbar und gut schweißbar sind, so daß sie für Bauteile verwendet werden können, die unter den o.g. Bedingungen eingesetzt werden.

Diese Aufgabe konnte überraschenderweise mit ganz speziellen Werkstoffen gelöst werden.

Gegenstand der Erfindung ist die Verwendung von Knet-und Gußwerkstoffen sowie Schweißzusatzwerkstoffen aus austenitischen Eisen-Nickel-Chrom-Silicium-Legierungen mit
- Cr: 8 bis 16 Gew.-%
- Ni: 20 bis 30 Gew.-%
- Si: >6,5 bis 7,4 Gew.-%
- Mn: max. 2,0 Gew.-%
- C: max. 0,03 Gew.-%
- P: max. 0,03 Gew.-%
- S: max. 0,01 Gew.-%
sowie optional bis zu 0,01 Gew.-% Bor und bis zu 0,25 Gew.-% Seltene Erdmetalle und den Rest als Eisen sowie minimalen Mengen an nicht vermeidbaren Beimengungen einschließlich der zur Desoxidation verwendeten Elemente Magnesium, Aluminium und Calcium für bei Temperaturen zwischen > 200°C und dem Siedepunkt der entsprechend eingesetzten Schwefelsäure mit heißer, 90 bis 96 gew.-%iger Schwefelsäure beaufschlagte Bauteile.

Vorteilhaft zur Unterdrückung der Abtragungsraten ist die Anwesenheit von kleinen Mengen an Nitrosylschwefelsäure (NOHSO₄) in der heißen, konzentrierten Schwefelsäure.

Die verwendeten Werkstoffe besitzen günstige mechanisch-technologische Eigenschaften. Trotz des hohen Anteils an Silicium ist die Kerbschlagzähigkeit der Werkstoffe zufriedenstellend. Die Legierungen lassen sich in allen technisch bedeutsamen Erzeugnisformen, wie Blech, Band, Rohr, Stab und Draht herstellen. Weitere Erzeugnisformen umfassen Stahlgußteile für beispielsweise Pumpen und Armaturen. Die Nickel-Chrom-Silicium-Eisen-Legierungen sind gut schweißbar, so daß die Fertigung von Apparaten in Schweißkonstruktion möglich ist. Der Schweißzusatz kann artgleich sein oder aber einen Deltaferrit-Anteil bis etwa 20 % aufweisen.

Die verwendeten Werkstoffe sind in hohem Maße korrosionsbeständig gegenüber einer über 90 bis 96 gew.-%igen H₂SO₄. Diese hohe Korrosionsbeständigkeit ist bei hohen Temperaturen > 200°C gegeben, bevorzugt bis 370°C. Die Werkstoffe bzw. Bauteile können bei Drucken von 0,1 bar bis 10 bar mit dieser heißen konzentrierten Schwefelsäure beaufschlagt werden. Die Werkstoffe können für Bauteile verwendet werden, die mit solchen heißen, konzentrierten Schwefelsäuren beaufschlagt werden. Solche Bauteile sind beispielsweise Reaktionsgefäße, Pumpen, Armaturen, Leitungen, Wärmetauscher u.a.

Solche Bauteile können durch Schmieden und Walzen (Kneten), durch Gießen, durch Auskleiden, durch Plattieren, durch formgebendes Schweißen oder durch Auftragschweißen hergestellt werden.

Als hohe Korrosionsbeständigkeit wird unter den genannten erschwerten Bedingungen eine Abtragungsrate von höchstens 1 mm/a, normalerweise jedoch höchstens 0,1 bis 0,2 mm/a verstanden.

Die Herstellung von Schwefelsäure kann durchgeführt werden durch katalytische Oxidation von Schwefeldioxid zu Schwefeltrioxid, Absorption des Schwefeltrioxids in Schwefelsäure mit einer Konzentration zwischen 98 und 101 %, wobei Absorptionswärme erzeugt wird, und die Absorption in einem Turm, in den die Schwefelsäure bei einer Temperatur von über 200°C eingebracht wird, durchgeführt wird, die den Turm verlassende Schwefelsäure eine Konzentration von mehr als 99 % und eine Temperatur von mehr als 200°C aufweist, die Absorptionswärme in einem Wärmeaustauscher durch Übertragung auf andere Flüssigkeiten oder durch Erzeugung von Dampf abgeführt wird, wobei der Wärmeaustauscher und gegebenenfalls andere mit der heißen Schwefelsäure in Kontakt stehende Bauteile aus austenitischen Eisen-Nickel-Chrom-Silicium₋ Legierungen mit
- Cr: 8 bis 16 Gew.-%
- Ni: 20 bis 30 Gew.-%
- Si: > 6,5 bis 7,4 Gew.-%
- Mn: max. 2,0 Gew.-%
- C: max. 0,03 Gew.-%
- P: max. 0,03 Gew.-%
- S: max. 0,01 Gew.-%
sowie optional bis zu 0,01 Gew.-% Bor und bis zu 0,25 Gew.-% Seltene Erdmetalle und den Rest als Eisen sowie minimalen Mengen an nicht vermeidbaren Beimengungen einschließlich der zur Desoxidation verwendeten Elemente Magnesium, Aluminium und Calcium bestehen.

Durch den Einsatz der speziellen Legierungen ist es möglich, bei der Schwefelsäureherstellung Dampf unter hohem Druck zu erzeugen und damit die Absorptionswärme optimal zu nutzen. Zudem kann bei hohen Temperaturen der Schwefelsäure gearbeitet werden.

Das Konzentrieren von Schwefelsäure auf 90 bis 96 Gew.-% H₂SO₄ und gegebenenfalls das Reinigen dieser Schwefelsäure bei Temperaturen > 200 bis 320°C, sowie gegebenenfalls Abkühlung kann so durchgeführt werden, daß das Konzentrieren und gegebenenfalls Reinigen der Schwefelsäure in Anlagen erfolgt, deren von der heißen Schwefelsäure beaufschlagte Anlagenteile ganz oder teilweise aus Knet- und/oder Gußwerkstoffen sowie Schweißzusatzwerkstoffen gefertigt sind, die aus austenitischen Eisen-Nickel-Chrom-Silicium-Legierungen mit
- Cr: 8 bis 16 Gew.-%
- Ni: 20 bis 30 Gew.-%
- Si: >6,5 bis 7,4 Gew.-%
- C: max. 0,03 Gew.-%
- Mn: max. 2,0 Gew.-%
- P: max. 0,03 Gew.-%
- S: max. 0,01 Gew.-%
sowie optional bis zu 0,01 Gew.-% Bor und bis zu 0,25 Gew.-% Seltene Erdmetalle und den Rest als Eisen sowie minimalen Mengen an nicht vermeidbaren Beimengungen einschließlich der zur Desoxidation verwendeten Elemente Magnesium, Aluminium und Calcium bestehen.

Die Erfindung soll anhand der nachfolgenden Beispiele naher erläutert werden.

### Beispiele

### Beispiel 1

Untersucht wurden Werkstoffproben aus einem kaltgewalzten, 2 mm dicken Blech folgender Zusammensetzung
- 0,005: Gew.-% Kohlenstoff
- 6,96: Gew.-% Silicium
- 1,38: Gew.-% Mangan
- 0,011: Gew.-% Phosphor
- 0,002: Gew.-% Schwefel
- 25,40: Gew.-% Nickel
- 9,15: Gew.-% Chrom
- Rest: Eisen

Nach einer Beanspruchungsdauer von 700 Stunden in 96 %iger, siedender Schwefelsäure (320°C) wurde die Abtragungsrate dieses austenitischen Stahls mit 0,15 mm/a bestimmt.

### Beispiel 2

Werkstoffproben aus einem kaltgewalzten, 2 mm dicken Blech obiger Zusammensetzung wurden in 96 %iger, NOHSO₄-haltiger, siedender Schwefelsäure (320°C) über 700 Stunden beansprucht. Nach dieser Beanspruchung wurde die Abtragungsrate des austenitischen Stahls mit <0,1 mm/a ermittelt.

## Patentansprüche

1. Verwendung von Knet- und Gußwerkstoffen sowie Schweißzusatzwerkstoffen aus austenitischen Eisen-Nickel-Chrom-Silicium-Legierungen mit
Ni 20 bis 30 Gew.-%
Cr 8 bis 16 Gew.-%
Si > 6,5bis 7,4 Gew.-%
Mn max. 2,0 Gew.-%
C max. 0,03 Gew.-%
P max. 0,03 Gew.-%
S max. 0,01 Gew.-%
sowie optional bis zu 0,01 Gew.-% Bor und bis zu 0,25 Gew.-% Seltene Erdmetalle und den Rest als Eisen sowie minimalen Mengen an nicht vermeidbaren Beimengungen einschließlich der zur Desoxidation verwendeten Elemente Magnesium, Aluminium und Calcium für bei Temperaturen zwischen >200°C und dem Siedepunkt der entsprechend eingesetzten Schwefelsäure mit heißer 90 bis 96 gew.-%iger Schwefelsäure beaufschlagte Bauteile.

2. Verwendung der Werkstoffe nach Anspruch 1 für Bauteile, die mit konzentrierter Schwefelsäure bei Temperaturen von >200°C bis 370°C beaufschlagt werden.

3. Verwendung der Werkstoffe nach Anspruch 1 oder 2 für Bauteile, die mit konzentrierter Schwefelsäure bei Drucken von 0,1 bar bis 10 bar beaufschlagt werden.

4. Verwendung der Werkstoffe nach einem der Ansprüche 1-3 für mit konzentrierter Schwefelsäure beaufschlagte Tauchpumpen.

## Claims

1. Use of ductile-working and casting materials and of welding filler materials made from austenitic iron-nickel-chromium-silicon alloys with
Ni 20 to 30 wt.%
Cr 8 to 16 wt.%
Si > 6.5 to 7.4 wt.%
Mn max. 2.0 wt.%
C max. 0.03 wt.%
P max. 0.03 wt.%
S max. 0.01 wt.%
optionally together with up to 0.01 wt.% of boron and up to 0.25 wt.% of rare earth metals and the remainder as iron together with minimal quantities of unavoidable admixtures including the elements magnesium, aluminium and calcium used for deoxidation, at temperatures between > 200°C and the boiling point of the particular sulphuric acid used, for components exposed to hot 90 to 96 wt.% sulphuric acid.

2. Use of the materials according to claim 1 for components which are exposed to concentrated sulphuric acid at temperatures of >200°C to 370°C.

3. Use of the materials according to claim 1 or 2 for components which are exposed to concentrated sulphuric acid at pressures of 0.1 bar to 10 bar.

4. Use of the materials according to one of claims 1 to 3 for submerged pumps exposed to concentrated sulphuric acid.

## Revendications

1. Utilisation de matériaux de corroyage et de fonderie ainsi que de matériaux d'apport de soudage constitués par des alliages austénitiques fer-nickel-chrome-silicium contenant
Ni 20 à 30 % en masse
Cr 8 à 16 % en masse
Si > 6,5 à 7,4 % en masse
Mn max. 2,0 % en masse
C max. 0,03% en masse
P max. 0,03 % en masse
S max. 0,01 % en masse
et éventuellement jusqu'à 0,01 % en masse de bore et jusqu'à 0,25 % en masse de métaux des terres rares, le reste étant constitué par du fer ainsi que des quantités minimes d'impuretés inévitables y compris les éléments magnésium, aluminium et calcium utilisés pour la désoxydation, pour pièces soumises à de l'acide sulfurique chaud à 90 à96 % en masse à des températures comprises entre plus de 200°C et le point d'ébullition de l'acide sulfurique utilisé de manière correspondante.

2. Utilisation des matériaux selon la revendication 1 pour des pièces qui sont soumises à de l'acide sulfurique concentré à des températures supérieures à 200°C et pouvant atteindre 370°C.

3. Utilisation des matériaux selon la revendication 1 ou 2 pour des pièces qui sont soumises à de l'acide sulfurique concentré à des pressions de 0,1 bar à 10 bar.

4. Utilisation des matériaux selon l'une des revendications 1 à 3 pour des pompes immergées soumises à de l'acide sulfurique concentré.
